# EUROPEAN PATENT APPLICATION

(11) **EP 4 027 092 A1**
(43) Date of publication of application: **13.07.2022**
(21) Application number: 21865338.4
(22) Date of filing: 09.11.2021
(51) Int. Cl.: F27D 1/10, C10G 9/18

(54) **ETHYLENE CRACKING FURNACE AND THERMALLY-INSULATING COMPOSITE LINING THEREOF**

(30) Priority: 12.11.2020 CN 202022632415 U
(71) Applicant: LUYANG ENERGY-SAVING MATERIALS CO., LTD., Yiyuan County Zibo Shandong 256100 (CN)
(72) Inventor: LU, Xiaokun, Shandong 256100 (CN); YAN, Yukun, Shandong 256100 (CN); CHEN, Zuosheng, Shandong 256100 (CN); REN, Xiangju, Shandong 256100 (CN); WANG, Jiankai, Shandong 256100 (CN); ZHAO, Chuanli, Shandong 256100 (CN); WANG, Hong, Shandong 256100 (CN)
(74) Representative: Kolster Oy Ab
(86) International application number: PCT/CN2021/129483
(87) International publication number: WO 2022/100563

(57) **Abstract**

A composite heat insulating lining includes an upper lining and a lower lining. The upper lining and the lower lining each include an inorganic fiber prefabricated layer, and the inorganic fiber prefabricated layer is configured to reduce the heat conductivity of the lining, thereby reducing heat loss. In addition, existing inorganic fiber materials are generally not resistant to high temperature. The composite heat insulating lining provided according to the present application is provided with a refractory coating on a surface of the inorganic fiber prefabricated layer to avoid direct heating of the inorganic fiber prefabricated layer, thereby avoiding high temperature damage to the inorganic fiber prefabricated layer, and improving the service life of the composite heat insulating lining. An ethylene cracking furnace is further provided according to the present application, which includes any one of the above composite heat insulating linings.

## Description

The present application claims priority to Chinese Patent Application No. 202022632415.4, titled "ETHYLENE CRACKING FURNACE AND COMPOSITE HEAT INSULATING LINING THEREOF", filed with the China National Intellectual Property Administration on November 12, 2020, which is incorporated herein by reference in its entirety.

### FIELD

The present application relates to the field of industrial furnaces, and in particular to a composite heat insulating lining. The present application further relates to an ethylene cracking furnace including the composite heat insulating lining.

### BACKGROUND

A cracking furnace is a major energy consumer of an ethylene device, and its energy consumption accounts for 50 to 60% of the total energy consumption of the device. A heat insulating lining can be arranged inside the furnace to reduce the heat dissipation of a furnace body to the outside, so that more heat can be used for heating materials to save energy and reduce energy consumption.

There is serious flame scouring in a lower part of a furnace wall of the ethylene cracking furnace. A conventional heat insulating lining is generally a composite structure made of refractory bricks, casting materials and refractory insulation tiles, and the conventional heat insulating lining has cumbersome design, production, and construction processes. And in actual operation, since refractory bricks and casting materials have large heat conductivity and structural issues such as a brick supporting plate is close to a hot surface of the furnace, there are too many heat dissipation bridges, so that the heat loss causes serious energy waste and poor heat preservation effect.

Therefore, a technical issue to be addressed by those skilled in the art is to reduce the heat loss of a heating furnace.

### SUMMARY

An object of the present application is to provide a composite heat insulating lining, and an inorganic fiber prefabricated layer is adopted by a lower lining of the composite heat insulating lining to perform heat insulation, so as to reduce the heat conductivity of the lining and thereby reduce the heat loss of an ethylene cracking furnace. Another object of the present application is to provide an ethylene cracking furnace including the above composite heat insulating lining.

In order to achieve the above objects, a composite heat insulating lining for an ethylene cracking furnace is provided according to the present application, where the composite heat insulating lining includes an upper lining arranged at a lower part of a convection chamber and at an upper part of a radiant chamber of the ethylene cracking furnace, and a lower lining arranged at a lower part of the radiant chamber of the ethylene cracking furnace, where the upper lining and the lower lining each include an inorganic fiber prefabricated layer, and the lower lining further includes a refractory coating arranged at a side of the inorganic fiber prefabricated layer away from an inner wall of the furnace.

Preferably, the upper lining and the lower lining each include a tiled layer for fitting to the inner wall of the furnace to increase the flatness of the inner wall of the furnace, and the inorganic fiber prefabricated layer is fixed at a side of the tiled layer away from the inner wall of the furnace.

Preferably, the inorganic fiber prefabricated layer includes multiple inorganic fiber prefabricated components arranged side by side, and a compensation strip is arranged at an upper side and a lower side of any one of the inorganic fiber prefabricated components.

Preferably, the compensation strip includes a fiber blanket and a U-shaped nail for fixing the fiber blanket, and two nail tips of the U-shaped nail are nailed to adjacent inorganic fiber prefabricated components, respectively.

Preferably, the tiled layer is specifically a composite layer made of refractory materials compressed to a predetermined thickness.

Preferably, the inorganic fiber prefabricated component is fixedly connected to the tiled layer by an anchoring member.

Preferably, one end of the anchoring member is fixed to the tiled layer, and the other end of the anchoring member is placed inside the composite fiber prefabricated component.

An ethylene cracking furnace is further provided according to the present application, which includes any one of the above composite heat insulating linings.

The above technical solution has the following beneficial effects.

The composite heat insulating lining provided according to the present application includes an upper lining and a lower lining. The upper lining and the lower lining each include an inorganic fiber prefabricated layer, and the inorganic fiber prefabricated layer is configured to reduce the heat conductivity of the lining, thereby reducing heat loss. In addition, existing inorganic fiber materials are generally not resistant to high temperature. The composite heat insulating lining provided according to the present application is provided with a refractory coating on a surface of the inorganic fiber prefabricated layer to avoid direct heating of the inorganic fiber prefabricated layer, thereby avoiding high temperature damage to the inorganic fiber prefabricated layer, and improving the service life of the composite heat insulating lining.

An ethylene cracking furnace is further provided according to the present application, which includes any one of the above composite heat insulating linings.

### BRIEF DESCRIPTION OF THE DRAWINGS

For more clearly illustrating embodiments of the present application or the technical solutions in the conventional technology, drawings referred to for describing the embodiments or the conventional technology will be briefly described hereinafter. Apparently, drawings in the following description are only examples of the present application, and for the person skilled in the art, other drawings may be obtained based on the provided drawings without any creative efforts.
FIG. 1 is a schematic view of an ethylene cracking furnace and its composite heat insulating lining provided according to an embodiment of the present application;
FIG. 2 is a schematic view of an upper lining of the composite heat insulating lining provided according to an embodiment of the present application;
FIG. 3 is a schematic view of a lower lining of the composite heat insulating lining provided according to an embodiment of the present application; and
FIG. 4 is a schematic view of a rooting treatment of a heat protection coating shown in FIG. 3.

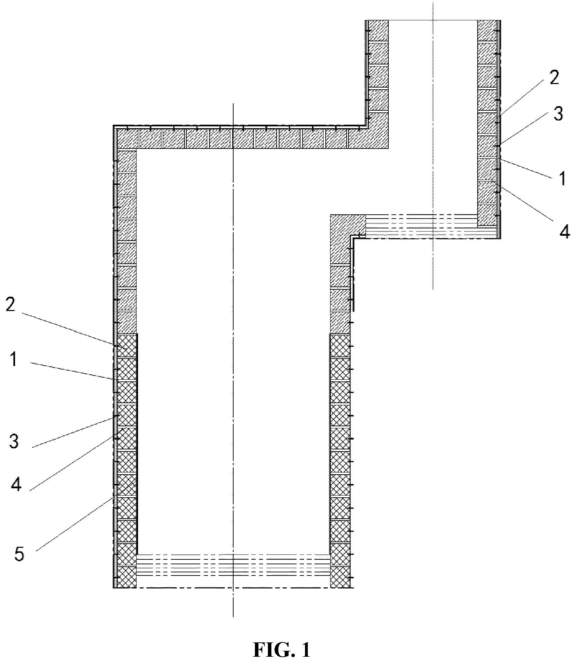

### Reference numerals in FIGS. 1 to 4:

| | | | |
|---|---|---|---|
| 1 | tiled layer, | 2 | inorganic fiber prefabricated component, |
| 3 | anchoring member, | 4 | compensation strip, |
| 5 | refractory coating. | | |

### DETAILED DESCRIPTION OF THE EMBODIMENTS

The technical solutions according to the embodiments of the present application will be described clearly and completely as follows in conjunction with the drawings in the embodiments of the present application. It is apparent that the described embodiments are only a part of the embodiments according to the present application, rather than all of the embodiments. Based on the embodiments of the present application, all other embodiments obtained without creative efforts by those of ordinary skill in the art shall fall within the protection scope of the present application.

In order to enable those skilled in the art to understand the solutions of the present application better, the present application is further described in detailed below in conjunction with the drawings.

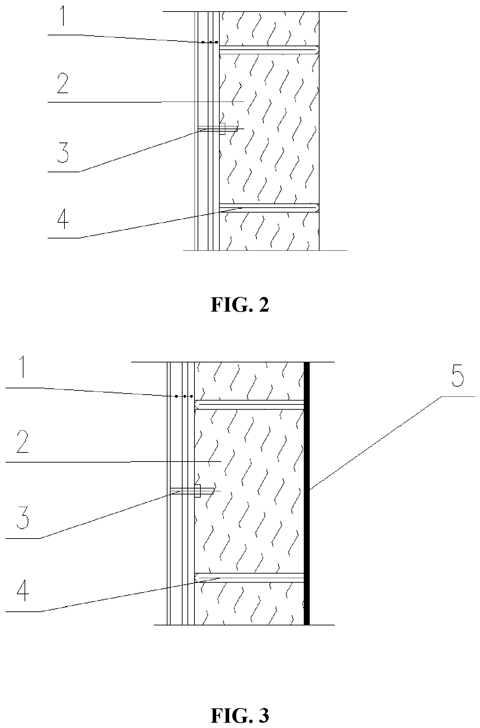

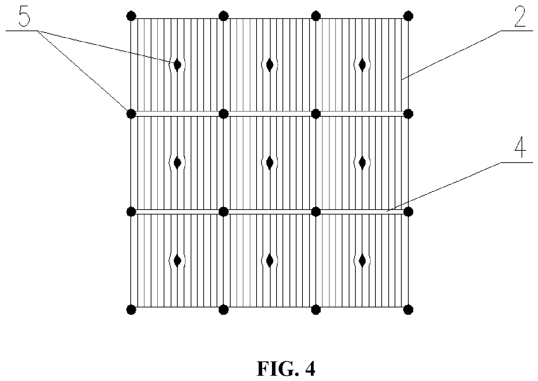

Reference is made to FIGS. 1 to 4. FIG. 1 is a schematic view of an ethylene cracking furnace and its composite heat insulating lining provided according to an embodiment of the present application; FIG. 2 is a schematic view of an upper lining of the composite heat insulating lining provided according to an embodiment of the present application; FIG. 3 is a schematic view of a lower lining of the composite heat insulating lining provided according to an embodiment of the present application; and FIG. 4 is a schematic view of a rooting treatment of a heat protection coating shown in FIG. 3.

The composite heat insulating lining provided according to the present application is applied to an ethylene cracking furnace. Since the ethylene cracking furnace includes a convection chamber and a radiation chamber, and a burner is arranged at the bottom of the radiation chamber, the lining in the radiation chamber will be in contact with the flame, and temperatures in the lower part of the convection chamber, the upper part of the radiation chamber and a spanning portion are relatively low. Therefore, the composite heat insulating lining includes an upper lining and a lower lining, where the upper lining is arranged at the lower part of the convection chamber of the ethylene cracking furnace, at the upper part, where the burner is not arranged, of the radiant chamber, and at an inner wall of the spanning portion. The lower lining is arranged at the lower part, where the burner is arranged, of the radiant chamber of the ethylene cracking furnace. The upper lining and the lower lining each include an inorganic fiber prefabricated layer. Since the inorganic fiber prefabricated layer is easily damaged under flame scouring, the lower lining further includes a refractory coating on a side of the inorganic fiber prefabricated layer away from an inner wall of the furnace. The refractory coating is in direct contact with the flame, which prevents the flame from scouring the inorganic fiber prefabricated layer, thereby prolonging the service life of the lower lining.

In an embodiment, the upper lining and the lower lining each include a tiled layer, and the tiled layer is arranged to fit the inner wall of the furnace, thereby increasing the flatness of the inner wall of the furnace. The inorganic fiber prefabricated layer is fixed on a side of the tiled layer away from the inner wall of the furnace. The tiled layer 1 can be made by compressing a variety of refractory materials. In a specific implementation manner of the present application, the tiled layer 1 includes two layers of inorganic fiber blankets and a nanoplate located between the two layers. The inorganic fiber blankets and the nanoplate are compressed to 30 to 50mm. Specifically, in the tiled layer 1, the inorganic fiber blanket is specifically embodied as a ceramic fiber blanket. An aluminum foil or other refractory heat-insulating materials may be adopted by the user in the tiled layer 1 as needed, which is not limited herein. The thickness of the inorganic fiber prefabricated layer can also be set as needed. The tiled layer 1 can be fixedly connected to the inner wall of the furnace by welding nails and other components arranged on the inner wall of the furnace. Before being fixed, the tiled layer can be temporarily fixed by a quick clamping sheet. After the tiled layer 1 is arranged, the inner lining of the furnace is flattened, which facilitates the laying and fixing of the inorganic fiber prefabricated layer. Moreover, the tiled layer 1 can also increase the heat insulation capacity of the heat insulating lining, and cooperate with the inorganic fiber prefabricated layer for heat insulation, which reduces the heat dissipation in the heating furnace, thereby effectively saving energy.

In an embodiment, the inorganic fiber prefabricated layer includes multiple inorganic fiber prefabricated components 2, which are generally prefabricated into rectangular or square shapes that are convenient for splicing. In a specific implementation manner of the present application, the inorganic fiber prefabricated components 2 are cuboid structures with a length and width of 300mm and a thickness of 280mm. The size of the inorganic fiber prefabricated component 2 can be set by the user as needed, which is not limited herein. Multiple inorganic fiber prefabricated components 2 are spread side by side on a side of the tiled layer 1 facing the inside of the furnace, so that a neat seam is formed between inorganic fiber prefabricated components 2 in a whole row, and the heat loss is reduced.

In an embodiment, in a specific implementation manner of the present application, the inorganic fiber prefabricated component 2 of the upper lining is embodied as a prefabricated member made of ceramic fibers and other materials, and the inorganic fiber prefabricated component 2 of the lower lining may be made of a composite of two inorganic fiber materials, where the inorganic fiber material near the inner side of the furnace may be specifically embodied as alumina fibers, which can withstand higher temperatures, and the inorganic fiber material far from the inner side of the furnace may be embodied as zirconium-containing fibers. There are many internal gaps in the inorganic fiber prefabricated layer, and it is difficult for the fiber material to form a heat dissipation bridge, thereby reducing the heat dissipation coefficient of the high-temperature heat insulating lining and improving the heat preservation effect of the furnace. The material of the inorganic fiber prefabricated component 2 may also be set by the user as needed, which is not limited herein.

In an embodiment, in a specific implementation manner of the present application, the inorganic fiber prefabricated components are arranged side by side to form a prefabricated component row, and the inorganic fiber prefabricated components 2 shrink when heated, which will cause gaps in the inorganic fiber prefabricated layers, resulting in heat loss from the gaps. Therefore, there are reserved gaps on the upper and lower sides of the prefabricated component row, and a gap may also be preset between two adjacent prefabricated component rows. The preset gap is provided with a compensation strip 4, which is made of compressed inorganic fiber materials, and will expand when the restraining force is reduced, so as to fill and compensate the seam between adjacent inorganic fiber prefabricated components 2 to reduce heat dissipation.

In an embodiment, in order to prevent the refractory coating 5 from falling off, the refractory coating 5 needs to be rooted in the inorganic fiber prefabricated layer. Specifically, an anchoring hole is defined on the inorganic fiber prefabricated layer. Before heat protection coating is applied to the surface of the inorganic fiber prefabricated layer, the heat protection coating is injected into the anchoring hole and is solidified in the anchoring hole to form an anchoring bolt. Subsequently, the heat protection coating is applied to the surface of the inorganic fiber prefabricated layer to form the refractory coating 5. The refractory coating 5 and the anchoring bolt are solidified to form an integral structure, and the friction between the anchoring bolt and the anchoring hole will prevent the protection coating 3 from falling off.

In an embodiment, as shown in FIG. 4, the anchoring hole includes a first anchoring hole defined in a preset gap, two first anchoring holes are separated by a preset length, and the compensation strip 4 is arranged between two adjacent first anchoring holes. The heat protection coating is injected into the first anchoring hole to not only fix the refractory coating 5 but also to fix two ends of the compensation strip 4.

In an embodiment, as shown in FIG. 4, the anchoring hole further includes a second anchoring hole, and the second anchoring hole is arranged in the prefabricated component row. Specifically, after the inorganic fiber prefabricated component 2 is mounted, the second anchoring hole is defined in the prefabricated component row, and the heat protection coating is filled into the second anchoring hole. Since the inorganic fiber prefabricated component 2 has certain elasticity, the heat protection coating in the second anchoring hole can be squeezed by the inorganic fiber prefabricated component 2, so that the refractory coating 5 and the inorganic fiber prefabricated layer are fixed more tightly.

In an embodiment, in order to facilitate the mounting of the inorganic fiber prefabricated component 2, the tiled layer 1 and the inorganic fiber prefabricated component 2 are connected by an anchoring member 3. Specifically, the anchoring member 3 may be specifically embodied as a connecting rod, one end of the connecting rod is prefabricated in the inorganic fiber prefabricated component 2, and the other end of the connecting rod is fixed to the tiled layer 1 and the inner wall of the furnace by a nut. In addition, the prefabrication depth of the anchoring member 3 is less than the thickness of the inorganic fiber prefabricated component 2, and ends of the anchoring member 3 are buried in the inorganic fiber prefabricated component 2. After the inorganic fiber prefabricated component 2 is laid, the anchoring member 3 is not exposed to the flame and hot air inside the furnace, so that the heat loss of the anchoring member 3 through heat conduction is reduced.

In an embodiment, the compensation strip 4 may be specifically embodied as an inorganic fiber blanket, such as a ceramic fiber blanket or an alumina fiber blanket, which is folded in half into a long strip, and the folded inorganic fiber blanket is compressed into a preset thickness and is cut into multiple strips with a preset length, and then the strip-shaped alumina fiber blankest are filled into the preset gap. In a specific implementation manner of the present application, the compensation strip 4 in the upper lining is a ceramic fiber blanket, and the compensation strip 4 in the lower lining is an alumina fiber blanket. The material of the compensation strip 4 can be set by the user as needed, and the compensation strip 4 may also be embodied as a single inorganic fiber blanket or a multilayer inorganic fiber blanket, which is not limited herein.

In an embodiment, the compensation strip 4 can be fixed by a fastener of U-shaped structure, such as a U-shaped nail. Specifically, two ends of the U-shaped nail are nailed to adjacent inorganic fiber prefabricated blocks, so that the U-shaped nail is arranged across the preset gap, and the middle part of the U-shaped nail limits the position of the strip-shaped inorganic fiber blanket. In order to improve the position-limiting effect and prevent the compensation strip 4 from falling off from the preset gap, multiple U-shaped nails can be arranged along the length direction of the preset gap.

The mounting process of the above- composite heat insulating lining is as follows. Firstly, the tiled layer 1 is laid on the inner wall of the radiant chamber and the inner wall of the lower part of the convection chamber, and the compensation strip 4 is arranged between the inorganic fiber prefabricated components 2, and the inorganic fiber prefabricated components 2 are spliced and fixed on tiled layer 1 by the anchoring member 3. Subsequently, the anchoring hole are formed in the inorganic fiber prefabricated layer of the lower lining, and the heat protection coating is poured into the anchoring hole. Finally, a layer of the heat protection coating is coated on the surface of the inorganic fiber prefabricated components 2 to form the refractory coating 5.

An ethylene cracking furnace is further provided according to the present application, and the ethylene cracking furnace includes the composite heat insulating lining provided according to any of the above embodiments. Specifically, the above composite heat insulating lining is specifically arranged at a lower part of a furnace wall of the inner wall of the furnace scoured by flame. The composite heat insulating lining can not only reduce heat loss, but also prevent the inner wall of the furnace wall from being damaged due to flame scouring, resulting in increased heat dissipation.

In this embodiment, the above tiled layer 1 can compensate for the unevenness of the inner wall of the furnace, flatten a mounting surface of the inorganic fiber prefabricated component 2, and also enable the inorganic fiber component to have a certain degree of adjustability during mounting, which can well ensure the flatness of the furnace lining. The side-by-side arrangement structure forms a good seam between entire rows, and reduces heat loss. The anchoring member 3 is arranged far away from the heating surface, which not only effectively reduces the heat loss caused by the high heat conductivity of the metal, but also reduces the material usage of the anchoring member 3 to reduce the cost of metal parts. By arranging the composite heat insulation layer used for the inner wall of the furnace at the lower part of the furnace wall of the heating furnace scoured by flame, the lightweight and fiberization of the heat insulating layer on the inner wall of the furnace are realized without drying off the furnace, which makes the design, production and construction of the heating furnace convenient, and improves the heat preservation effect, thereby extending the service life of the heating furnace.

It should be noted that, relational terms herein such as first and second are only used to distinguish one entity from several other entities, and do not necessarily require or imply there is any actual relationship or sequences between these entities.

The heating furnace provided by this application and the composite heat insulating lining used for the inner wall of the furnace have been described in detail above. The above description for the embodiments is merely used to facilitate understanding the method and the core concept of the present application. It should be noted that several improvements and modifications can be made to the present application by those skilled in the art without departing from the principle of the present application. These improvements and modifications shall fall within the scope of the claims of the present application.

## Claims

1. A composite heat insulating lining for an ethylene cracking furnace, comprising an upper lining arranged at a lower part of a convection chamber and at an upper part of a radiant chamber of the ethylene cracking furnace, and a lower lining arranged at a lower part of the radiant chamber of the ethylene cracking furnace, wherein the upper lining and the lower lining each comprise an inorganic fiber prefabricated layer, and the lower lining further comprises a refractory coating arranged at a side of the inorganic fiber prefabricated layer away from an inner wall of the furnace.

2. The composite heat insulating lining according to claim 1, wherein the upper lining and the lower lining each comprises a tiled layer (1) for fitting to the inner wall of the furnace to increase flatness of the inner wall of the furnace, and the inorganic fiber prefabricated layer is fixed at a side of the tiled layer (1) away from the inner wall of the furnace.

3. The composite heat insulating lining according to claim 2, wherein the inorganic fiber prefabricated layer comprises a plurality of inorganic fiber prefabricated components (2) arranged side by side, and a compensation strip (4) is arranged at an upper side and a lower side of any one of the inorganic fiber prefabricated components (2).

4. The composite heat insulating lining according to claim 3, wherein the compensation strip (4) comprises a fiber blanket and a U-shaped nail for fixing the fiber blanket, and two nail tips of the U-shaped nail are nailed to adjacent inorganic fiber prefabricated components (2), respectively.

5. The composite heat insulating lining according to claim 2, wherein the tiled layer (1) is a composite layer made of refractory materials compressed to a predetermined thickness.

6. The composite heat insulating lining according to any one of claims 3 to 5, wherein each of the inorganic fiber prefabricated components (2) is fixedly connected to the tiled layer (1) by an anchoring member (3).

7. The composite heat insulating lining according to claim 6, wherein one end of the anchoring member (3) is fixed to the tiled layer (1), and another end of the anchoring member (3) is placed inside the composite fiber prefabricated component (2).

8. An ethylene cracking furnace, comprising the composite heat insulating lining according to any one of claims 1 to 7.
